# EUROPÄISCHE PATENTANMELDUNG

(11) **EP 2 110 585 A1**
(43) Veröffentlichungstag der Anmeldung: **21.10.2009**
(21) Anmeldenummer: 09005168.1
(22) Anmeldetag: 08.04.2009
(51) Int. Cl.: F16K 1/10, F16K 31/122

(54) **Ventil mit pneumatischer Antriebseinheit**

(30) Priorität: 18.04.2008 DE 202008005469 U
(71) Anmelder: Bürkert Werke GmbH & Co. KG, 74653 Ingelfingen (DE)
(72) Erfinder: Renninger, Jürgen, 74243 Langenbrettach (DE)
(74) Vertreter: Prinz & Partner

(57) **Zusammenfassung**

Das Ventil hat eine pneumatische Antriebseinheit, die einen Zylinder (8), einen im Zylinder axial verschiebbaren Kolben (4) und eine axiale Spindel (3) aufweist, die am Kolben axial starr befestigt ist und mit ihrem vom Kolben abgewandten Ende ein Ventilelement (9) betätigt. Der Kolben teilt den Zylinder in eine dem Ventil zugewandte Zylinderkammer (5A) und in eine vom Ventil abgewandte Zylinderkammer. Bei einheitlicher Ausführung des Zylinders ist die Spindel in zwei verschiedenen Ausführungen einsetzbar: einer ersten Ausführung mit einem Druckluftkanal, der in die vom Ventil abgewandte Zylinderkammer mündet, und einer zweiten Ausführung mit einem Druckluftkanal (13), der in die dem Ventil zugewandte Zylinderkammer (5A) mündet.

## Beschreibung

Die Erfindung betrifft ein Ventil mit einer pneumatischen Antriebseinheit, die einen Zylinder, einen im Zylinder axial verschiebbaren Kolben und eine axiale Spindel aufweist, die am Kolben axial starr befestigt ist und mit ihrem vom Kolben abgewandten Ende ein Ventilelement betätigt, wobei der Kolben den Zylinder in eine dem Ventil zugewandte Zylinderkammer und in eine vom Ventil abgewandte Zylinderkammer teilt.

Pneumatisch angetriebene Prozessventile werden je nach Anwendungsfall in zwei Ausführungsvarianten benötigt: steuerdrucklos geschlossen oder steuerdrucklos geöffnet. Deshalb sind diese Ventile üblicherweise mit zwei Steueranschlüssen vorgesehen, von denen jeweils nur einer aktiv ist. Oder es werden zwei Ventile bereitgestellt; eines mit Steueranschluss im oberen Bereich des Ventils für eine Anströmung oberhalb eines Kolbens und eines mit Steueranschluss im unteren Bereich für eine Anströmung unterhalb eines Kolbens. Diese beiden Ventilvarianten benötigen sich voneinander unterscheidende Innenteile wie Kolben, Spindel, Feder usw..

Im erfindungsgemäßen Ventil, das in den Schutzansprüchen angegeben ist, werden beide Steuerfunktionen über nur einen Anschluss realisiert, wobei die Steuerluft über diesen Anschluss direkt zu einer Hohlspindel geleitet wird, welche die Anströmung eines Kolbens übernimmt.

Die Hohlspindel wird in zwei Ausführungen bereitgestellt: Die Innenbohrung der Hohlspindel erstreckt sich nur über einen kurzen Bereich und endet so, dass die Luft im oberen Bereich des Ventils ausströmt.

Oder die Innenbohrung der Hohlspindel erstreckt sich über einen längeren Bereich und endet so, dass die Luft im unteren Bereich des Ventils ausströmt.

Ein rotationssymmetrischer zylinderförmiger Becher bildet die äußere Hülle des Ventils und ist für beide Varianten identisch.

Der Zylinder ist fest mit einem Rohr verbunden und kann so gemeinsam mit diesem in ein Fluidgehäuse eingeschraubt werden.

Der einzige Steueranschluss ist vorteilhafter Weise nicht seitlich am Zylinder angeordnet sondern befindet sich im Zentrum der im Wesentlichen kreisförmigen oberen Stirnseite des Zylinders.

Hier befindet sich eine Bohrung, in der eine Spindel axial verschiebbar angeordnet ist.

Der Steueranschluss ist fest mit der Spindel verbunden, beispielsweise als drehbare Winkelschnellkupplung ausgeführt, und macht die Hubbewegung mit.

An der Verbindungsstelle von Spindel und Steueranschluss ist vorteilhafter Weise eine optische Stellungsanzeige integriert. Befindet sich das drucklos geschlossene Ventil in geöffneter Stellung, so ist die Spindel teilweise oberhalb des Zylinders sichtbar, was beispielsweise mit einer farblichen ringförmigen Markierung hervorgehoben werden kann.

In einem anderen Ausführungsbeispiel ist der Steueranschluss fest mit dem Zylinder verbunden. Bei dieser Ausführungsform wird auf eine optische Stellungsanzeige verzichtet.

Bedingt durch die rotationssymmetrische Bauweise des Antriebs und des stirnseitig zentral angeordneten Steueranschlusses erübrigt sich ein Ausrichten dieser Steueranschlüsse nach dem Einschrauben des Antriebes in das Gehäuse. Bei seitlich angeordneten Steueranschlüssen muss normalerweise nach dem Einschrauben des Antriebes in das Gehäuse eine Ausrichtung der Steueranschlüsse z.B. in Rohrleitungsrichtung vorgenommen werden, was eine Verdrehbarkeit des Antriebes nach der Befestigung im Gehäuse erfordert.

Der erfindungsgemäße Antrieb kann sowohl für Schrägsitzventile, als auch für Geradsitz- oder Membranventile verwendet werden.

### Zeichnungen

Fig. 1 Schnittbild eines Prozessventils drucklos geschlossen in geöffnetem Zustand;
Fig. 2 Schnittbild eines Prozessventils drucklos geschlossen in geschlossenem Zustand;
Fig. 3 Schnittbild eines Prozessventils drucklos geöffnet in geschlossenem Zustand;
Fig. 4 Schnittbild eines Prozessventils drucklos geöffnet in geöffnetem Zustand.

### Liste der Bezugszeichen

- 1: Pneumatikanschluss
- 2: Spindelverlängerung
- 3: Spindel
- 4: Kolben
- 5A, B: Kammer
- 6: Druckfeder
- 7: Stellungsanzeige
- 8: Zylinder
- 9: Sitzdichtung
- 10: Gehäuse
- 11: Ventilsitz
- 12: Rohr
- 13: Querbohrung

### Beschreibung

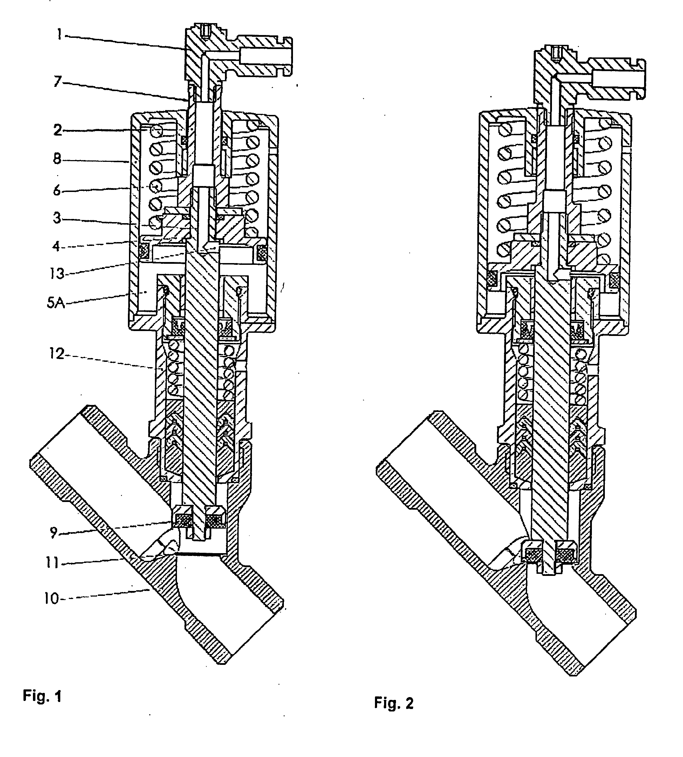

In Fig. 1 ist ein Schnittbild eines drucklos geschlossenen Ventils in geöffnetem Zustand dargestellt.

Das Ventil weist im Wesentlichen einen Zylinder 8 als Hülle, einen Kolben 4, eine Spindel 3, eine Sitzdichtung 9 und einen Ventilsitz 11 in einem Gehäuse 10 auf.

Der Zylinder 8 eines pneumatischen Antriebs endet an einer Stirnseite mit einem nach innen zeigenden Kragen, so dass um die Mittelachse herum eine ebenso zylindrische Aussparung bleibt, die zur Aufnahme der Spindelverlängerung 2 dient und mit dem Steueranschluss 1 fest verbunden wird.

Die gegenüberliegende Stirnfläche wird nach Bestückung des Zylinders 8 mit den benötigten Innenteilen wie Kolben, Spindel und Feder fest mit einem Rohr 12 verbunden, welches einen kleineren Durchmesser aufweist als der Zylinder 8. Das Rohr 12 weist an seinen beiden Enden jeweils um den ganzen Umfang herum zwei Absätze zur Befestigung auf.

Die beiden fest miteinander verbunden Teile Zylinder 8 und Rohr 12 werden sodann in einem Gehäuse 10 beispielsweise mittels Gewinde befestigt.

Der Zylinder 8 ist rotationssymmetrisch aufgebaut. Seine Mittelachse wird von einer Spindel 3 mit Spindelverlängerung 2 gebildet, die fest miteinander verbunden sind. Die Spindelverlängerung 2 ist zusammen mit der Spindel 3 axial frei verschiebbar im Zylinder 8 angeordnet. Der einzige Steueranschluss 1 ist beispielsweise mittels Winkelschnellkupplung mit der Spindelverlängerung 2 fest verbunden. Der Kolben 4 ist an dem Ende der Spindel 3 und auf dieser ebenfalls rotationssymmetrisch angeordnet und fest mit dieser verbunden, welches dem Ende gegenüber liegt, an dem sich die Sitzdichtung 9 befindet.

Die Spindelverlängerung 2 wird von einem Rohrabschnitt gebildet, durch den Luft über den Steueranschluss 1 und einen längeren hohlen Abschnitt der Spindel 3, welcher in einer Querbohrung 13 endet, ins Ventil gelangt. Durch die Querbohrung 13 strömt die Steuerluft in die Kammer 5A unterhalb des Kolbens 4 und bewegt diesen gegen die Federkraft der Feder 6 nach oben. Der Ventilsitz 11 ist wie in Fig. 1 dargestellt dann geöffnet.

Die optische Stellungsanzeige 7 am oberen Ende der Spindelverlängerung 2 ist mit der Spindel 3 mittels Steuerluft nach oben bewegt worden und ist außerhalb des Zylinders 8 sichtbar.

In Fig. 2 ist das gleiche Ventil wie in Fig. 1 ohne Druckluftbeaufschlagung gezeigt. Der Ventilsitz 11 ist geschlossen. Die optische Stellungsanzeige 7 befindet sich innerhalb des Zylinders 8 und ist nicht sichtbar.

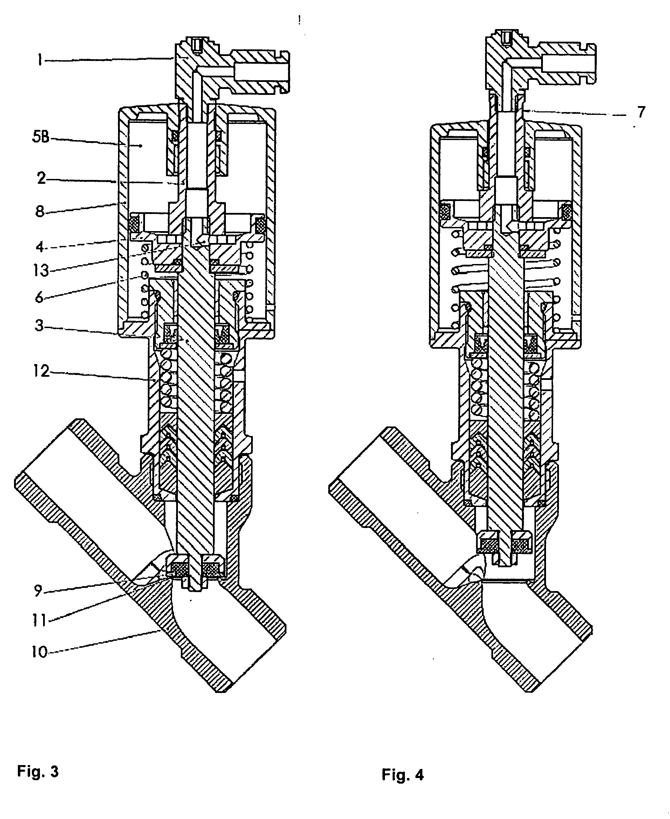

In den Fig. 3 und 4 ist die Ausführung eines drucklos geöffneten Prozessventils dargestellt. Diese Ausführung unterscheidet sich von der ersten äußerlich nicht. Auch in dieser Ausführung gibt es wie bei der ersten nur den einen zentralen Steueranschluss. Unterschiedlich ist die Spindel 3, welche einen kürzeren hohlen Abschnitt aufweist, welcher in eine Querbohrung 13 mündet. Steuerluft strömt durch diese Querbohrung 13 in die Kammer 5 B, die sich im oberen Bereich des Zylinders 8 befindet, und drückt den Kolben 4 gegen die Federkraft nach unten. Der Ventilsitz 11 ist geschlossen.

Der Kolben 4 ist im Vergleich zur ersten Ausführung ein identisches Teil, das aber um 180° gedreht eingebaut ist.

## Patentansprüche

1. Ventil mit einer pneumatischen Antriebseinheit, die einen Zylinder, einen im Zylinder axial verschiebbaren Kolben und eine axiale Spindel aufweist, die am Kolben axial starr befestigt ist und mit ihrem vom Kolben abgewandten Ende ein Ventilelement betätigt, wobei der Kolben den Zylinder in eine dem Ventil zugewandte Zylinderkammer und in eine vom Ventil abgewandte Zylinderkammer teilt, **dadurch gekennzeichnet, dass** bei einheitlicher Ausführung des Zylinders die Spindel in zwei verschiedenen Ausführungen einsetzbar ist:
- einer ersten Ausführung mit einem Druckluftkanal, der in die vom Ventil abgewandte Zylinderkammer mündet; und
- einer zweiten Ausführung mit einem Druckluftkanal, der in die dem Ventil zugewandte Zylinderkammer mündet.

2. Ventil nach Anspruch 1, **dadurch gekennzeichnet, dass** auch der Kolben in einheitlicher Ausführung für beide Ausführungen der Spindel vorgesehen ist.

3. Ventil nach Anspruch 2, **dadurch gekennzeichnet, dass** der Kolben in um 180° verschiedener Orientierung an den zwei Spindelausführungen befestigt ist.

4. Ventil nach Anspruch 2 oder 3, **dadurch gekennzeichnet, dass** in derjenigen Zylinderkammer, in die der Druckluftkanal nicht mündet, eine Druckfeder angeordnet ist, die den Kolben in eine Ruhestellung beaufschlagt.

5. Ventil nach Anspruch 4, **dadurch gekennzeichnet, dass** die Druckfeder in der vom Ventil abgewandten Zylinderkammer angeordnet ist und die Ruhestellung des Kolbens einer Schließstellung des Ventils entspricht.

6. Ventil nach Anspruch 4, **dadurch gekennzeichnet, dass** die Druckfeder in der dem Ventil zugewandten Zylinderkammer angeordnet ist und die Ruhestellung des Kolbens einer Öffnungsstellung des Ventils entspricht.

7. Ventil nach einem der vorstehenden Ansprüche, **dadurch gekennzeichnet, dass** der Druckluftkanal in der Spindel einen axialen Kanalabschnitt und einen radialen in die Zylinderkammer mündenden Kanalabschnitt aufweist, wobei der axiale Kanalabschnitt der ersten Spindelausführung eine größere Länge aufweist als der axiale Kanalabschnitt der zweiten Spindelausführung.

8. Ventil nach Anspruch 7, **dadurch gekennzeichnet, dass** für beide Spindelausführungen eine axiale Spindelverlängerung in gleicher Ausführung vorgesehen ist, die mit der Spindel starr verbunden ist und den axialen Kanalabschnitt zu einem Druckluftanschluss hin fortsetzt.

9. Ventil nach Anspruch 8, **dadurch gekennzeichnet, dass** die Spindelverlängerung in einem axial einwärts gerichteten Kragen der vom Ventil abgewandten Stirnwand des Zylinders gleitverschiebbar und dichtend geführt ist.

10. Ventil nach Anspruch 9, **dadurch gekennzeichnet, dass** die Spindelverlängerung einen Endabschnitt aufweist, der bei geöffnetem Ventil aus dem Zylinder axial herausragt und eine optisch erkennbare Markierung aufweist.

11. Ventil nach Anspruch 10, **dadurch gekennzeichnet, dass** die Spindelverlängerung über eine Winkelschnellkupplung mit dem Druckluftanschluss verbunden ist.

12. Ventil nach Anspruch 8 oder 9, **dadurch gekennzeichnet, dass** der Druckluftanschluss an der vom Ventil abgewandten Stirnwand des Zylinders angebracht ist.
